# EUROPEAN PATENT APPLICATION

(11) **EP 1 739 335 A1**
(43) Date of publication of application: **03.01.2007**
(21) Application number: 06012020.1
(22) Date of filing: 12.06.2006
(51) Int. Cl.: F16L 37/40, F16L 37/248, A62C 35/68

(54) **Quick-coupling connection device for a robotic apparatus of a fire-fighting system, arranged in a tunnel**

(30) Priority: 29.06.2005 IT MI20051222
(71) Applicant: Faster S.p.A., 26027 Rivolta d'Adda (Cr) (IT)
(72) Inventor: Arosio, Massimo, 24040 Treviglio (Bergamo) (IT)
(74) Representative: Mayer, Hans Benno

(57) **Abstract**

A pipe (1) comprises spaced male-portions (2) of quick-connections for coupling with corresponding spaced female portions (5) of said quick-connections.

The male part connections (2) comprise a shut-off disc-like body (24) operating as a valve, arranged in a suitable seat thereof and adapted to be driven by a driving stem urged in a shut-off direction by a spring means (23) bearing against a valve-guide disc (20) arranged at a fixed position and having a plurality of through openings (21). The male part quick-connection (2) comprises outer slots (3) therein, which engage corresponding pins (4) arranged inside the female part quick-coupling body (5).

In the female part quick-connection (5) a fixed pusher (26) is arranged, said fixed pusher (26) being assembled on a disc including openings (27) for allowing water to pass therethrough, and being directed toward the shut-off body (24) to open the valve assembled in the male part quick-connection (2) as the two quick-coupling parts (2,5) are connected to one another.

## Description

### BACKGROUND OF THE INVENTION

The present invention relates to a quick-coupling connection device for robotized apparatus of a fire-fighting system, arranged in a tunnel therethrough a pressurized water pipe passes.

As is known, long tunnels passing through mountains are conventionally provided with fire fighting means designed for preventing flames from being propagated through the tunnel.

Actually, in a fire condition, it is very important to timely operate fire extinguishing means, using, for example, fire extinguishing water, at an early fire generation and flame propagation time.

In the prior art, fire fighting mechanisms, in the form of a robotized apparatus, are already known.

In a fire condition, such an apparatus is automatically located at the coupling station which is nearest to the fire starting region.

As the apparatus arrives at such a fire starting region, it is automatically coupled, with its water ejecting nozzles, to a fixed pipe or duct holding flame extinguishing pressurized water.

In such a case it is of essential importance to automatically connect, in a safe manner and in a time as small as possible, the extinguishing water duct to the robotized apparatus.

### SUMMARY OF THE INVENTION

Accordingly, the main object of the present invention is to provide a quick-connection means or device to be arranged between the extinguishing water pipe and the robotized apparatus, which quick-coupling connection means is able, under rest condition, to shut-off the water flow, while allowing a quick and safe coupling with the fire extinguishing water delivery means to be easily performed.

The above mentioned aim is achieved by a quick-coupling connection device for a robotized apparatus of a fire fighting system, arranged in a tunnel therethrough a pressurized water pipe passes, said pipe including a plurality of male-part quick-connections for coupling with corresponding female-part quick-connections, said male-part quick-connections having, in an inside thereof, a shut-off disc-like body operating as a shut-off valve, arranged in a valve seat and adapted to be driven by a driving stem urged in a shutting-off direction by a spring means bearing against a valve guide disc arranged at a fixed position and having a plurality of therethrough openings, said male-part quick-connection being moreover provided with a plurality of slots therein elements provided inside the female part quick-connection body are engaged, inside said female-part quick-connection a pusher element being arranged at a fixed position, said pusher element being assembled on a disc having throughgoing openings for allowing water to pass therethrough, said disc being oriented toward the shut-off body for opening the valve assembled in the male part quick-connection as the two quick-connection parts are coupled to one another.

### BRIEF DESCRIPTION OF THE DRAWINGS

The subject matter of the invention will be disclosed in a more detailed manner hereinafter with reference to the accompanying drawings, where:
Figure 1 is a perspective view of a fire extinguishing water supplying pipe or duct, having a quick-coupling fitting for delivering fire extinguishing water in a connection operating step thereof;
Figure 2 shows the fire estinguishing water supplying pipe or duct with a fully connected quick-coupling fitting; and
Figure 3 is a cross-sectional view showing the fire extinguishing water delivery pipe or duct, with a male-part quick-coupling fitting and a female-part quick-coupling fitting assembled to a fire fighting robotized apparatus before a connection thereof.

### DESCRIPTION OF THE PREFERRED EMBODIMENT

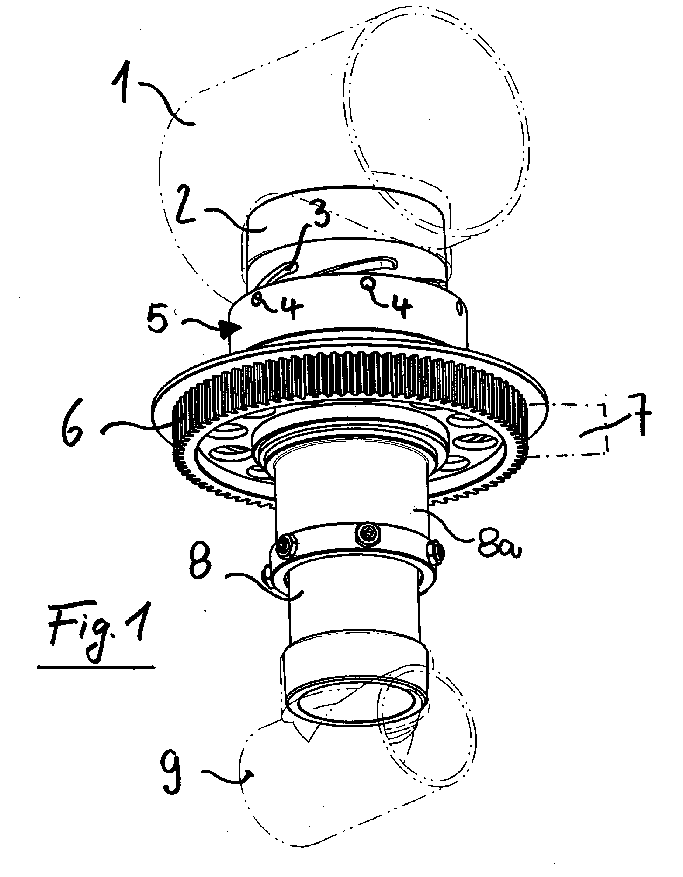

As shown in figure 1, a tunnel (not shown) is traversed through the overall length thereof by a fire extinguishing pressurized water pipe or duct 1.

At several places of the tube 1 quick-coupling fittings 2 forming a male part of the quick-coupling device are provided.

Coupling slots 3, as helically provided on the outside of the male-part quick-coupling fittings 2, and guide pins 4 projecting inward the female part quick-connection or coupling, generally indicated by 5, allow to provide a functional connection of the male part quick-coupling 2 and female part quick-coupling 5, as it will be disclosed in a more detailed manner hereinafter.

To allow the female part quick-coupling 5 to perform an automatizable translation and rotary movement, during the connection operation, the quick-coupling 5 is connected to a gear wheel 6, therewith a motorized rack 7, schematically shown in figure 1 engages.

From the bottom portion of the female part quick-coupling 5, a tubular element 8 receiving therein a tubular body 8a which can telescopically translate with respect to the tubular element 8 projects.

At a free end portion thereof, the tubular body 8a is coupled to the robotized apparatus, indicated by 9.

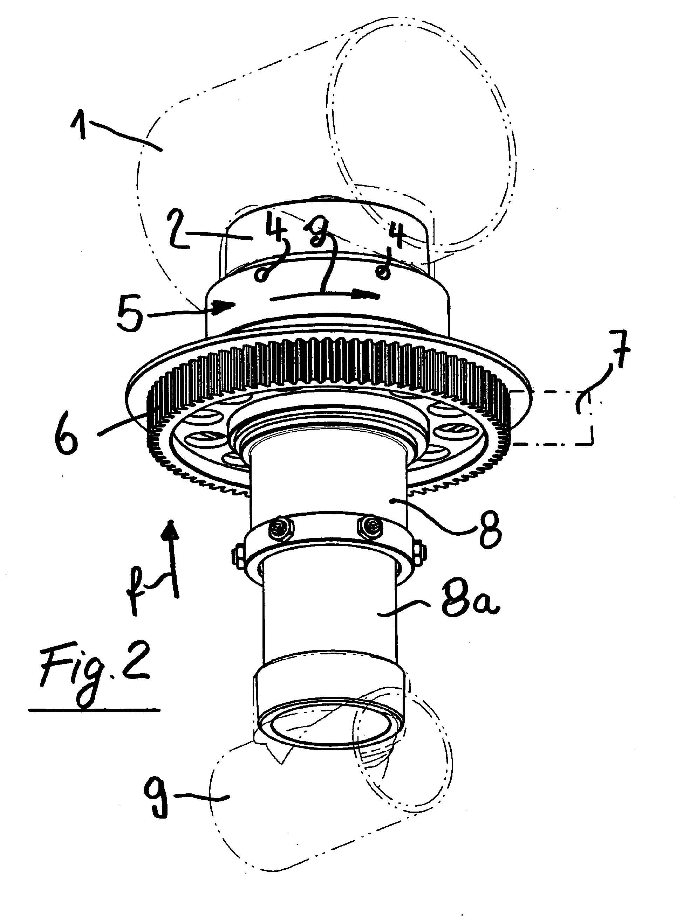

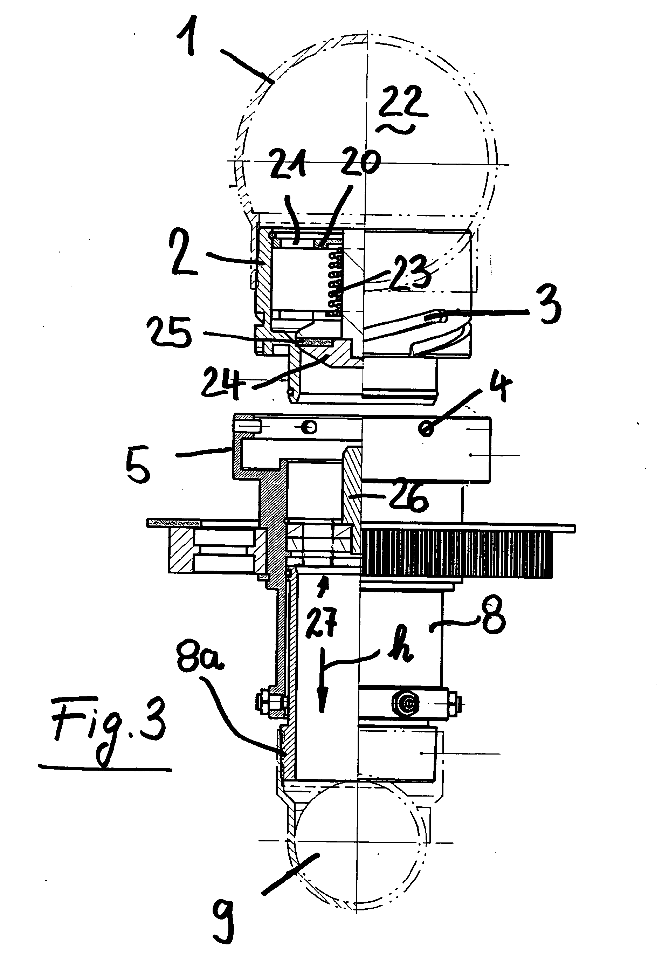

As shown in figure 2, the male-part quick-coupling 2 projecting from the water supply pipe 2, and the female-part quick-coupling 5 are operatively coupled to one another by a raising movement in the direction indicated by the arrow (f), and simultaneous rotary movement as indicated by the arrow (g) (owing to the engagement of the pin elements 4 in the helical slots 3) as it will be disclosed in a more detailed manner with reference to figure 3.

Figure 3, in particular, shows the pressurized water delivery pipe or duct 1, and that part of the quick-coupling having the outer helical slots 3 providing the translating-rotary connection.

Inside the male part 2 of the quick coupling is provided a fixed disc 20 including a plurality of throughgoing holes 21 for allowing pressurized water supplied through said pipe 1 to pass therethrough.

With the female part quick-coupling 5 not yet operatively coupled to the male-part quick-coupling 2, a spring 23 arranged inside male-part quick-coupling 2 urges the disc-like shut-off valve body 24 including an 0-ring 25 bearing against a sealing recess formed in the body of the male-part quick-coupling 2.

Thus, the disc 24 will be raised, while overcoming the urging force of the spring 23 and the duct water pressure, to allow water to flow from the duct or pipe 1 through the throughgoing holes 21 of the disc 20 to the female part quick-coupling 5, and through the inside openings 27 of the body 5.

Thus the water flow will be directed, in the direction indicated by the arrow (h), to the robotized apparatus 9, thereby starting the fire extinguishing operation.

## Claims

1. A quick-coupling connection device for a robotized apparatus of a fire fighting system arranged in a tunnel, said tunnel being traversed by a pressurized water pipe including spaced male-part quick-connections for coupling with corresponding female-part quick-connections, **characterized in that** said male-part quick-connections (2) comprise in an inside thereof a shut-off disc-like body (24) operating as a shut-off valve arranged in a shut-valve seat (24, 25) and adapted to be driven by a driving stem urged in a shut-off direction by an urging spring means (23) bearing against a disc element (20) operating as a fixed valve guiding element, said valve-guiding element including a plurality of throughgoing openings (21), that each said male-part quick-connections (2) comprises a plurality of outer slots (3) therein are slidably engaged pin elements (4) arranged inside a body of said female-part quick-connection (5), that in said female-part quick-connection is provided a positionally fixed pusher element (26) assembled on a disc including a plurality of throughgoing openings (27) for allowing water to pass therethrough, said disc being oriented toward said shut-off body (24), for opening the valve arranged in said male-part quick-connection, as the two parts of said quick-coupling device are connected to one another.

2. A quick-coupling connection device, for a robotized apparatus of a fire fighting system, **characterized in that** said device comprises a tubular body (8a) coupled to said robotized fire fighting apparatus (9) and designed as a constructional element adapted to be telescopically driven through a tubular body (8) of said female-part quick-connection (5).
